# EUROPEAN PATENT APPLICATION

(11) **EP 4 596 778 A1**
(43) Date of publication of application: **06.08.2025**
(21) Application number: 23889213.7
(22) Date of filing: 10.11.2023
(51) Int. Cl.: D06F 37/30, D06F 37/40, H02K 7/11, H02K 7/116, H02P 1/16

(54) **CLOTHING PROCESSING DEVICE AND CONTROL METHOD OF CLOTHING PROCESSING DEVICE**

(30) Priority: 10.11.2022 KR 20220149648
(71) Applicant: LG Electronics Inc., Yeongdeungpo-gu Seoul 07336 (KR)
(72) Inventor: AN, Yongjun, Seoul 08592 (KR); CHUNG, Bosun, Seoul 08592 (KR); KIM, Seonjoong, Seoul 08592 (KR); YOON, Seongno, Seoul 08592 (KR); KIM, Dongwon, Seoul 08592 (KR)
(74) Representative: Ter Meer Steinmeister & Partner
(86) International application number: PCT/KR2023/018093
(87) International publication number: WO 2024/101957

(57) **Abstract**

The present disclosure relates to a clothing processing device, wherein a clutch is switched into a normal mode after a rotation shaft or a drum rotates in a state of being configured in a deceleration mode to decelerate a speed of a rotor when a water level of a tub is zero.

## Description

### [Technical Field]

The present disclosure relates to a laundry treating apparatus and a control method thereof.

### [Background]

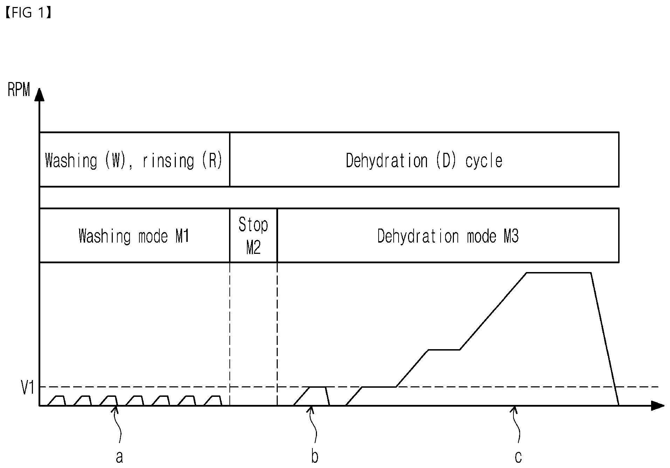

FIG. 1 illustrates a control method of an existing laundry treating apparatus.

In general, a laundry treating apparatus includes a washing machine that executes a washing course of removing foreign substances from laundry. The washing course includes a washing cycle of removing the foreign substances from the laundry with water and detergent, a rinsing cycle of removing the separated foreign substances and the detergent by washing the laundry with water, and a dehydration cycle of removing moisture from the laundry.

Such washing cycle, the rinsing cycle, and the dehydration cycle are executed while applying a physical force required for the laundry by adjusting a rotation speed and a rotation direction of a drum in a state in which the laundry is accommodated in the rotating drum.

Because the washing cycle and the rinsing cycle are executed in a state in which water is accommodated in the drum, it is common for the existing laundry treating apparatus to execute the cycles in a washing mode (a) of intermittently rotating the drum at a speed in an area lower than a resonance speed V3 rather than rotating the drum at a high speed or changing the rotation direction of the drum.

The resonance speed V3 may be defined as a speed at which vibration with a magnitude equal to or greater than an allowable value occurs inside a cabinet when the speed of the drum increases or decreases.

In addition, because the dehydration cycle is executed in a state in which all of water is drained from the drum, it is common for the existing laundry treating apparatus to rotate the drum at a speed in an area higher than the resonance speed V3.

In recent years, when executing the dehydration cycle in the existing laundry treating apparatus, instead of rotating the drum immediately up to a maximum speed after rotating the drum, a simplified dehydration mode (b) of rotating the drum faster than or longer in one direction than in the washing mode (a) was executed and then a main dehydration mode (c) of accelerating the drum to the maximum speed was executed.

Accordingly, the existing laundry treating apparatus was able to prevent overload of a motor that rotates the drum and suppress vibration (unbalance) that occurs when the drum is accelerated or rotated at the high speed by first removing moisture from the laundry containing water after the rinsing cycle is finished and then executing the main dehydration mode (c) with the laundry that is slightly lighter.

However, it was common for the existing laundry treating apparatus to have a structure in which power generated from the motor is inevitably transmitted to a rotation shaft connected to the drum. Therefore, in the washing cycle, the rinsing cycle, or the dehydration cycle, the power of the motor was transmitted to the rotation shaft as it is, and thus the drum had no choice but to rotate.

As a result, the existing laundry treating apparatus had a problem in that a torque required to execute the washing cycle and the rinsing cycle is not sufficient when water is accommodated in the drum or a relatively large amount of laundry is accommodated in the drum. In addition, there was a problem that a load more than necessary is generated in the motor to execute the washing operation and the rinsing operation.

In addition, although the existing laundry treating apparatus executes the simplified dehydration mode (b) in the dehydration cycle, because the drum is accelerated to a higher speed in the corresponding simplified dehydration mode (b) than in the washing mode (a), there was a problem in that it is difficult to transfer the torque required to execute the simplified dehydration mode (b).

Accordingly, there was a problem that, after the simplified dehydration mode (b) is executed, the motor is overloaded and thus the main dehydration mode (c) is not able to be entered or the main dehydration mode (c) is not able to be normally executed.

### [Summary]

### [Technical Problem]

A purpose of the present disclosure is to provide a laundry treating apparatus that reduces a rotational force of a motor and transmits the reduced rotational force to a drum in an area where torque is greatly required, and normally transmits the rotational force of the motor to the drum in an area where high rotation speed is required.

A purpose of the present disclosure is to provide a laundry treating apparatus that may rotate a drum at a high speed in a dehydration cycle, but may reduce a rotational force of a motor, amplify torque, and transmit the amplified torque to the drum in an initial stage of the dehydration cycle.

A purpose of the present disclosure is to provide a laundry treating apparatus that may lower a load of a motor and suppress unbalance or vibration of a drum.

A purpose of the present disclosure is to provide a laundry treating apparatus that may rotate a drum with a great torque when water is accommodated in the drum, and rotate the drum at a high speed when water is drained from the drum.

A purpose of the present disclosure is to provide a laundry treating apparatus that may rotate a drum with a great torque when laundry is containing much moisture and rotate the drum at a high speed when the laundry is light.

### [Technical Solutions]

To solve the above-described problems, the present disclosure provides a laundry treating apparatus including a cabinet having an opening defined therein at a front side, a tub constructed to store water therein and in communication with the opening, a drum rotatably accommodated in the tub, a rotation shaft passing through the tub and coupled to a rear surface of the drum, a motor that provides power for rotating the rotation shaft, a clutch that determines a normal mode where the rotation shaft rotates by the power of the motor and a deceleration mode where the rotation shaft decelerates and rotates at a speed lower than a speed in the normal mode, and a water level sensor that senses a water level of the tub.

When the tub is empty, the clutch may be set to switch a mode thereof to the normal mode after the rotation shaft or the drum is rotated while the clutch is set to be in the deceleration mode.

When the drum stops after the rotation while the clutch is set to be in the deceleration mode, the clutch may switch the mode thereof to the normal mode.

The clutch may switch the mode thereof to the normal mode after the drum rotates for a predetermined time or a predetermined number of times in the deceleration mode.

A duration for the clutch to be in the normal mode may be set greater than a duration for the clutch to be in the dehydration mode.

The clutch may maintain the deceleration mode such that the drum rotates for at least 10 seconds.

The drum may rotate at a speed equal to or lower than a resonance speed in the deceleration mode, and rotate at a speed equal to or higher than the resonance speed in the normal mode.

The resonance speed may be defined as a speed causing vibration with a magnitude equal to or greater than an allowable value within the cabinet when the speed of the drum increases or decreases.

The clutch may maintain the deceleration mode when water is accommodated in the tub.

The laundry treating apparatus may further include a drain pump that drains water in the tub to the outside of the cabinet,

The clutch may be blocked from switching the mode thereof to the normal mode before the drain pump operates.

The drum may rotate more rapidly when the tub is empty than when water is accommodated in the tub even when the clutch is set to be in the deceleration mode.

The drum may repeat the rotation and stopping more frequently when water is accommodated in the tub than when the tub is empty.

The laundry treating apparatus may further include a gear assembly that is coupled to the motor and selectively reduces a rotation speed of the motor, and the clutch may allow the gear assembly to rotate at a speed different from the speed of the motor in the deceleration mode, and allow the gear assembly to rotate integrally with the motor in the normal mode.

The motor may include a stator coupled to the tub, and a rotor rotatable by the stator, and the gear assembly may include a solar gear coupled to the rotor, a plurality of planetary gears disposed to be engaged with an outer circumferential surface of the solar gear, a ring gear disposed to be engaged with the plurality of planetary gears, and a carrier rotatable by connecting the plurality of planetary gears to each other, wherein the rotation shaft is coupled to the carrier.

The clutch may couple the ring gear to the rotor in the normal mode, and separate the ring gear from the rotor in the deceleration mode.

The clutch may include a coupler coupled to an outer circumferential surface of the ring gear and integrally rotatable with the ring gear, a stopper that is coupled to the stator and fixes the coupler, and an elastic portion that pushes the coupler from the stopper to the rotor.

The laundry treating apparatus of the present disclosure may further include an actuation assembly that moves the coupler.

The actuation assembly may include an actuator that is fixed to the tub and generates a rotational motion, a conversion member that converts the rotational motion into a reciprocating motion, and a lever that is connected to the conversion member and moves the coupler.

### [Advantageous Effects]

The present disclosure may prevent the overload of the motor and operate the motor at optimal efficiency.

The present disclosure may suppress the unbalance occurring in the drum.

The present disclosure may prevent the dehydration from failing or from delaying when executing the dehydration cycle.

### [Brief Description of the Drawings]

FIG. 1 illustrates a control method of an existing laundry treating apparatus.
FIG. 2 illustrates an outer appearance embodiment of a laundry treating apparatus of the present disclosure.
FIG. 3 illustrates an internal structure embodiment of a laundry treating apparatus of the present disclosure.
FIG. 4 illustrates an internal configuration embodiment of a laundry treating apparatus of the present disclosure.
FIG. 5 illustrates a driver embodiment of a laundry treating apparatus of the present disclosure.
FIG. 6 illustrates an internal configuration of a driver of a laundry treating apparatus of the present disclosure.
FIG. 7 illustrates a clutch operating scheme of a laundry treating apparatus of the present disclosure.
FIG. 8 illustrates an operation effect of a clutch in a laundry treating apparatus of the present disclosure.
FIG. 9 illustrates a control method of a laundry treating apparatus of the present disclosure.
FIG. 10 illustrates a clutch control method of a laundry treating apparatus of the present disclosure.
FIG. 11 illustrates a clutch control method of a laundry treating apparatus of the present disclosure in detail.

### [Best Mode]

Hereinafter, embodiments disclosed herein will be described in detail with reference to the attached drawings. In the present document, the same or similar reference numerals are assigned to the same or similar components even in different embodiments, and a description thereof is replaced with the first description. As used herein, singular expressions include plural expressions unless the context clearly dictates otherwise. Additionally, in describing the embodiments disclosed herein, when it is determined that detailed descriptions of related known technologies may obscure the gist of the embodiments disclosed herein, the detailed descriptions will be omitted. In addition, it should be noted that the attached drawings are only for easy understanding of the embodiments disclosed herein and should not be construed as limiting the technical idea disclosed herein.

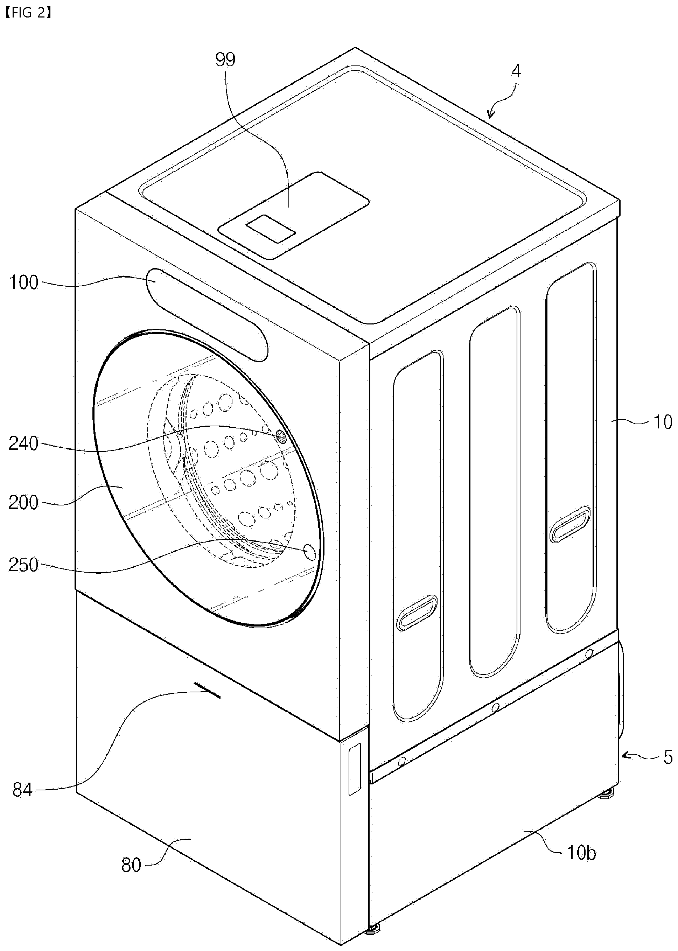

FIG. 2 is a view illustrating an outer appearance of a laundry treating apparatus of the present disclosure.

The laundry treating apparatus of the present disclosure may be equipped as one of a washing machine 1 and a dryer 2, or may include one or more of a composite apparatus 4 in which the washing machine 1 and the dryer 2 are integrated and an auxiliary apparatus 5 disposed under the composite apparatus 4.

Hereinafter, the laundry treating apparatus of the present disclosure will be described as being equipped with the composite apparatus 4 and the auxiliary apparatus 5 disposed under the composite apparatus 4. However, this is only for a comprehensive description because the composite apparatus 4 and the auxiliary apparatus 5 include all forms and configurations of the washing machine 1 and the dryer 2, and does not exclude that the laundry treating apparatus of the present disclosure is equipped only as the washing machine 1.

In other words, the laundry treating apparatus of the present disclosure may be equipped only as the washing machine 1, but even when it is equipped as the composite apparatus 4, a same configuration as that of the washing machine 1 may be installed.

The laundry treating apparatus of the present disclosure may include a cabinet 10 forming the outer appearance thereof. An opening through which laundry may be inserted and withdrawn may be defined in a front side of the cabinet 10, and the opening may be opened and closed by a door 200.

The door 200 may be pivotably coupled to the cabinet 10 to selectively open and close the opening.

When the door 200 may be equipped such that only a transparent material is exposed at a front surface thereof when being fixed or locked to the cabinet 10. To this end, the front surface of the door 200 may be made of glass, plastic made of a transparent material, or acrylic.

A control panel 100 that receives a command for controlling the laundry treating apparatus of the present disclosure or displays information to the outside may be disposed upward of the door 200.

The cabinet may include a front panel 11 that forms a front surface thereof, and the control panel 100 may be installed on the front panel 11.

The control panel 100 may include an input unit to receive various commands from a user. The control panel 100 may also include a display that displays information of the laundry treating apparatus to the outside. At least a portion of the control panel 100 may be formed as a touch panel to perform both functions of the input unit and the display.

The control panel 100 may have a width greater than a height, or may be formed in an oval shape or a field track shape. Therefore, the control panel 100 may display more information than when it is formed in a circular shape, or may easily display a completed sentence, phrase, or the like.

The control panel 100 may be equipped to receive a command to execute the course or to display a state of executing the course, information necessary to execute the course, and the like.

The control panel 100 may include one or more of a plurality of buttons or the touch panel for receiving the command from the user, a microphone for receiving a user's voice, a camera or a proximity sensor for receiving a motion or a state of the user, a screen for displaying visual information to the user, and a speaker for transmitting auditory information to the user.

When the laundry treating apparatus of the present disclosure is provided in a front load type in which the opening is defined at the front side of the cabinet, the control panel 100 may be disposed upward of the door 200 at the front side of the cabinet 10. Accordingly, accessibility and identifiability may be secured.

In one example, when the laundry treating apparatus of the present disclosure is provided in a top load type in which the opening is defined at an upper side of the cabinet, the control panel 100 may be disposed in front of the door 200 on a top surface of the cabinet 10.

When the auxiliary apparatus 5 is disposed under the composite apparatus 4, the control panel 100 may be equipped as a composite panel capable of controlling one or more of the composite apparatus 4 and the lower auxiliary apparatus 5 at once.

When the composite apparatus 4 of the present disclosure includes the configuration of the dryer 2, a filter 99 that filters drum air from the outside of the drum may be disposed at the upper side of the cabinet 10.

The filter 99 may be equipped to filter foreign substances of a circulation duct that is accommodated in the cabinet 10 and circulates air, and the circulation duct may be disposed in the cabinet 10 closer to the upper side than to a lower side of the cabinet 10, so that the filter 99 may be equipped to be withdrawn upward from an upper panel 13 of the cabinet. A structure of the circulation duct will be described later.

The door 200 may be coupled to the cabinet 10 in a form of a push button. When the door 200 is pressed toward the cabinet 10, the door 200 may repeatedly open and close the opening in sequence.

When the door 200 is equipped in the form of the push button, even in a situation in which the user is not able to pull the door 200, such as when the user is holding the laundry in both hands, the door 200 may be fixed to the cabinet 10 or separated from the cabinet 10 in sequence when pressed toward the opening or the cabinet 10.

The door 200 is pivotably coupled to a hinge disposed on one side of the opening. Accordingly, it is preferable that a locker with which the door 200 is coupled or fixed to the cabinet 10 is installed in an area facing the hinge with respect to the opening.

The door 200 may have a pressable portion 250 disposed on an outer surface thereof to induce the user to press a place corresponding to the locker. The pressable portion 250 may be displayed to be distinguished from other areas on the surface, or may be visually distinguished by being formed as a separate lamp or the like.

The door 200 may further include a sensing unit 240 that receives a pressing or a touch by the user to separate the door 200 from the cabinet 10.

The sensing unit 240 may be equipped as a component capable of sensing a user's physical contact. For example, the sensing unit 240 may include any component as long as it is able to sense the user's physical contact, such as a touch film, a touch panel, a physical button, a piezoelectric element, and the like installed on the door 200.

When the user touches or presses the sensing unit 240, the door 200 may be opened from the cabinet 10 even when it is not pressed toward the cabinet 10. Accordingly, damage or scratches that may occur when the door 200 is pressed by the user or an object may be prevented in advance.

The sensing unit 240 may be disposed near the pressable portion 250. Accordingly, the user may intuitively recognize that the sensing unit 240 and the pressable portion 250 are areas that receive the user's input.

The sensing unit 240 may be embedded in the door 200, but may be displayed on the outer surface of the door 200. Therefore, the sensing unit 240 may further include a separate light emitting body. In one example, an area in which the sensing unit 240 is installed may be displayed by marking, shading, or the like on the surface of the door 200.

The laundry treating apparatus of the present disclosure may further include the auxiliary apparatus 5 disposed under the composite apparatus 4. The auxiliary apparatus 5 may be disposed under the composite apparatus 4, and the composite apparatus 4 may be seated and disposed on the auxiliary apparatus 5.

The auxiliary apparatus 5 may include an auxiliary cabinet 10b disposed under the cabinet 10 of the composite apparatus 4 and a drawer 80 extended forward from the auxiliary cabinet 10b.

An opening input unit 84 that may receive, from the user, an extension command to extend the drawer 80 forward may be disposed at a front side of the drawer 80.

The opening input unit 84 may be equipped as any component as long as it is able to be in contact with the user's body and receive the extension command. For example, it may be equipped as a touch panel or a button.

A vertical level at which the composite apparatus 4 is disposed may increase by the auxiliary apparatus 5. Accordingly, when the composite apparatus 4 is provided in the front load type in which the door 200 is disposed at the front side of the cabinet 10, a location of the opening 14 is also raised, so that the user may easily access the door 200 by less bending or not bending a waist.

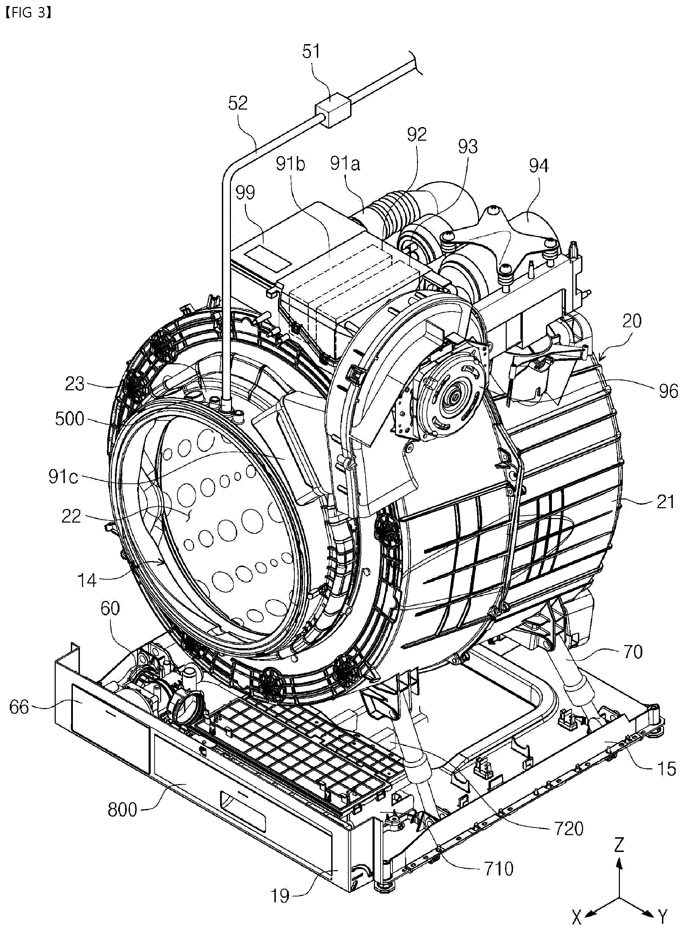

FIG. 3 illustrates an inner cross-section of a laundry treating apparatus of the present disclosure.

The laundry treating apparatus of the present disclosure may include a tub 20 that is accommodated in the cabinet 10 and stores water therein, and a drum 30 that is rotatably accommodated in the tub 20 and stores water therein.

The drum 30 may include a drum body 31 that is rotatably disposed in the tub 20 and stores the laundry therein, and a drum inlet 35 that is disposed at a front side of the drum body 31 and is in communication with the opening 14.

The drum body 31 may be formed in a cylindrical shape, and may have a through-hole 33 in communication with an interior of a tub body 21 defined in a rear surface or an outer circumferential surface thereof. The drum body 31 may be made of a metal material.

The laundry treating apparatus of the present disclosure may include a water supplier 50 that supplies water to the tub 20 and a drainage 60 that drains water from the tub 20.

The water supplier 50 may include a water supply valve 51 that is coupled to the cabinet 10 and connected to an external water supply source to selectively supply water, and a water supply pipe 52 that extends from the water supply valve 51 and transmits water supplied from the external water supply source. A distal end of the water supply pipe 52 may be coupled to the tub 20, or may be coupled to a gasket 23 to be described later. As long as the water supply pipe 52 is able to supply water to the tub 20, the water supply pipe 52 may be coupled to any place of the tub 20.

The drainage 60 may include a discharge pipe 61 that is connected to a lower side of the tub 20 to discharge water from the tub 20, a drain pump 62 that provides power to discharge water supplied from the discharge pipe 61 to the outside of the cabinet 10, and a drain pipe 63 that extends from the drain pump 62 to the outside of the cabinet 10 to discharge water.

**The laundry treating apparatus of the present disclosure may further include a water level sensor 25 that senses a water level of the tub 20.** The water level sensor 25 may be equipped as any component as long as it is able to sense the water level inside the tub 20. For example, the water level sensor 25 may include a communication pipe that is in communication with the tub 20 and has a closed distal end, and a device that is disposed at an upper side of the communication pipe and senses a pressure change inside the communication pipe.

The laundry treating apparatus of the present disclosure may further include a support 70 that supports the tub 20 inside the cabinet 10.

The support 70 may include one or more of a suspension that supports the lower side of the tub 20 and a spring that supports the upper side of the tub 20.

The laundry treating apparatus of the present disclosure may include a driver M that is coupled to the tub 20 and rotates the drum 30.

The driver M may include a motor 400 that provides power for rotating the drum 30, and a rotation shaft S that receives the power generated from the motor 400 and rotates the drum 30.

The rotation shaft S may be coupled to and fixed to a center of a rear surface of the drum 30.

The driver M may transmit one or more of the power and an RPM of the motor 400 to the rotation shaft S as it is.

Alternatively, the driver M may further include an additional component that reduces the RPM of the motor 400 while further increasing a torque generated in the motor 400, and transmits it to the rotation shaft S.

For example, the driver M may include at least one of a converter 500 that reduces the rotation speed of the motor 400 and transmits the reduced rotation speed, and a clutch 600 that selects the conversion device 500 to selectively reduce the rotation speed.

A detailed structure of the driver will be described later.

The tub body 21 of the tub 20 may further include a bearing housing 24 having a rear surface through which the rotation shaft S passes and rotatably supporting the rotation shaft S.

The bearing housing 24 may be formed in a shape of a metal disk and may be embedded in the tub 20 in a process of injection-molding the tub body 21.

Accordingly, even when the tub body 21 is made of a resin material, the bearing housing 24 may be firmly fixed to a rear surface of the tub body 21.

The laundry treating apparatus of the present disclosure may execute a plurality of courses for treating the laundry based on the configuration. The courses may include a washing course for removing foreign substances from the laundry and a drying course for removing moisture from the laundry.

The laundry treating apparatus of the present disclosure may include an integrated controller in which a controller that executes the washing course and a controller that executes the drying course are integrated, and the integrated controller may be embedded in the control panel 100 or may be disposed separately from the control panel 100 and mounted inside the cabinet 10.

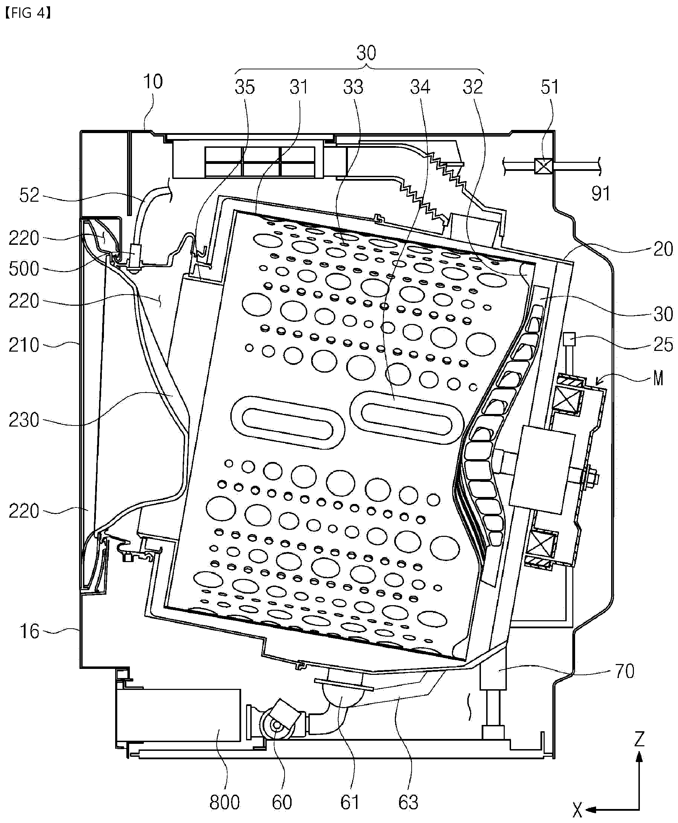

FIG. 4 is a detailed view illustrating an internal structure of a cabinet in a laundry treating apparatus of the present disclosure.

The tub 20 may include the tub body 21 formed in a cylindrical shape and having a tub inlet 22 formed at a front side thereof.

The tub body 21 may be made of a plastic material or the like, and the tub inlet 22 may protrude from the front side of the tub body 21 in a cylindrical shape with a diameter smaller than a diameter of the tub body 21.

The tub inlet 22 may be in communication with the opening 14 of the cabinet 10.

In one example, the tub 20 may further include a gasket 23 that seals a space between the tub inlet 22 and the opening 14.

The gasket 23 may be formed as a separate component from the tub body 21. It may be formed in a ring shape to seal the space between the tub inlet 22 and the opening 14.

The gasket 23 may be made of an elastic material. Therefore, the gasket 23 may maintain the state of sealing the space between the opening 14 and the tub inlet 22 even when vibration occurs in the tub 20, and may prevent the vibration from being transmitted to the opening 14 or the door 200.

In addition, the laundry treating apparatus of the present disclosure may further include a heat supplier 90 that may circulate air inside the tub 20 or the drum 30 and heat the air.

The heat supplier 90 may be disposed downward of the tub 20.

However, because the tub 20 is the closest component to the drum 30 and the drainage 60 is disposed under the tub 20, the heat supplier 90 may be seated on the tub 20.

The heat supplier 90 may be seated on top of the tub 20. That is, the heat supplier 90 may be disposed upward of the opening of the tub.

The heat supplier 90 may include one or more of a circulation flow channel 91 that extends from the tub 20 in at least one of a front and rear direction/a left and right direction and circulates air inside the tub 20, an evaporator 92 that is accommodated in the circulation flow channel 91 and cools the air to condense moisture, a condenser 93 that is disposed downstream of the evaporator and heats the air, a compressor 94 that is disposed outside the circulation flow channel 91 and supplies a refrigerant for heating the air to the condenser 93, an expansion valve that expands and cools the refrigerant discharged from the condenser 93 and transfers the refrigerant to the evaporator 92, and a circulation fan 96 that is disposed inside the circulation flow channel 91 and provides power for circulating the air.

The circulation flow channel 91 may be equipped such that one end thereof is connected to an upper rear side of the tub body 21 and a distal end thereof is connected to an upper front side of the tub body 21 or the gasket 24.

The circulation fan 96 may operate such that air is sucked into the circulation flow channel 91 from the rear of the drum 30 and the air is discharged into the drum body 31 via the drum inlet 35.

Accordingly, hot air generated by the heat supplier 90 may be introduced into the drum inlet 35 and uniformly supplied to the drum body 31, and the laundry may be uniformly dried. In addition, air that has dried the laundry may pass through the through-hole 33 by a negative pressure provided by the blower fan 96 and be introduced into one end of the circulation flow channel 91 without difficulty.

As a result, the heat supplier 90 may supply hot air into the drum body 31 even though the drum 30 is accommodated in the tub 20 and a plurality of through-holes 33 are defined ion the outer circumferential surface of the drum 30 to increase air resistance.

In the heat supplier 90, because the tub 20 is disposed thereunder, a water collector that collects condensate and a water storage tank may be omitted. That is, water condensed in the circulation flow channel 91 may be collected in the tub 20 and discharged to the drainage 60.

The circulation flow channel 91 may be disposed to extend in a ' 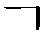 ' shape on top of the tub 20 to secure a volume with which air flows or area sizes of the evaporator and the condenser.

That is, after extending forward from one side of the upper rear side of the tub body 21, the circulation flow channel 91 may extend to the other side of the upper front side of the tub body 21.

The circulation flow channel 91 may include an inflow portion 91a extending from the rear side to the front side of the tub body 21, a movement portion 91b extending from the inflow portion to the front other side of the tub body 21 or the gasket 24, and an outflow portion 91c extending downward from the movement portion to be in communication with an inside of the gasket 24.

The duct may extend in the left and right direction on the tub 20, and may have the filter 99, the evaporator 92, and the condenser 93 sequentially disposed therein.

The circulation fan 96 may be in communication with the circulation flow channel 91.

The circulation fan 96 may be installed inside the circulation flow channel 91, or may include a housing connecting the movement portion with the outflow portion.

The circulation fan 96 may be disposed in front of the tub body 21 to evenly distribute a weight of the rear side of the tub body 21 to which the driver M is coupled.

The circulation fan 96 may operate such that air flows from the inflow portion to the outflow portion.

A water supply pipe 51 of the water supplier 50 may be connected to the gasket 24. A nozzle 500 coupled to a distal end of the water supplier 51 may be installed on the gasket 24. The nozzle 500 evenly spray water supplied from the water supply pipe 51 into the drum body 31.

The laundry treating apparatus of the present disclosure may further include a circulator 65 that circulates water in the tub 20 again and supplies the same.

The circulator 65 may include a circulation pump that is in communication with the drain pump 62 or disposed on one side of the drain pump 62, and a circulation hose that supplies water drained from the tub body 21 back to the tub 20.

Accordingly, water in the tub 20 may be reused during the washing cycle or the rinsing process to save water, and washing efficiency may also be increased by uniformly dissolving detergent or the like via the circulator 65.

The laundry treating apparatus of the present disclosure may further include a detergent box 700 that stores the detergent supplied to the tub 20.

The detergent box 700 may be disposed downward of the tub 200. The detergent box 700 may be prevented from interfering with the heat supplier 90 disposed upward, and may be exposed to the user without difficulty even when the composite apparatus 4 is raised because of the auxiliary apparatus 5.

The detergent box 700 may include a detergent body that accommodates the detergent therein, and a detergent pump that sprays the detergent accommodated in the detergent body to the tub 20. Accordingly, water in the tub 20 may be prevented from arbitrarily entering the detergent box 700 or the detergent may be prevented from being arbitrarily supplied.

The detergent box 700 may supply the detergent to at least one of the drainage 60 and the circulator 65.

When the detergent is supplied to the circulator 65, the detergent may be supplied to the tub 20 while operating the circulation pump or the like, the detergent may be more easily dissolved in water during the circulation process, and the detergent may be evenly supplied to the laundry.

A filter 800 may be disposed between the drain pump 62 and the circulator 65, thereby preventing the foreign substances discharged from the tub 20 from being re-introduced into the circulator 65.

The filter 800 may be exposed forward at one side of the detergent box 700, and may be forwardly detachable.

The cabinet may further include a base 15 supporting the filter 800 and the detergent box 700.

The base 15 may form a bottom surface of the cabinet 10.

The base 15 may support the support 70, and may support the detergent box 700 and the filter 800 so as not to interfere with the support 70.

The detergent box 700 may be detachable from the base 15, and may be withdrawable forward from the base 15. Accordingly, the user may continuously replenish the detergent in the detergent box 700 or wash the detergent box 700.

A stepped panel 16 that guides insertion and withdrawal of one or more of the detergent box 700 and the filter 800 and is disposed under the front panel 11 may be further included at a location in front of the base 15.

The stepped panel 16 may include a hole through which the detergent box 700 and the filter 800 are inserted and withdrawn, and may prevent the base 15 from being exposed to the outside.

The stepped panel 16 may be formed separately from the front panel 11. Accordingly, the front panel 11 and the stepped panel 16 may be made of different materials. As a result, even when the front panel 11 is made of a metal material or the like having high rigidity or difficulty in molding, the stepped panel 16 may be made of a material that is easy to mold so as to guide the insertion and withdrawal of one or more of the detergent box 700 and the filter 800 or expose one or more of them.

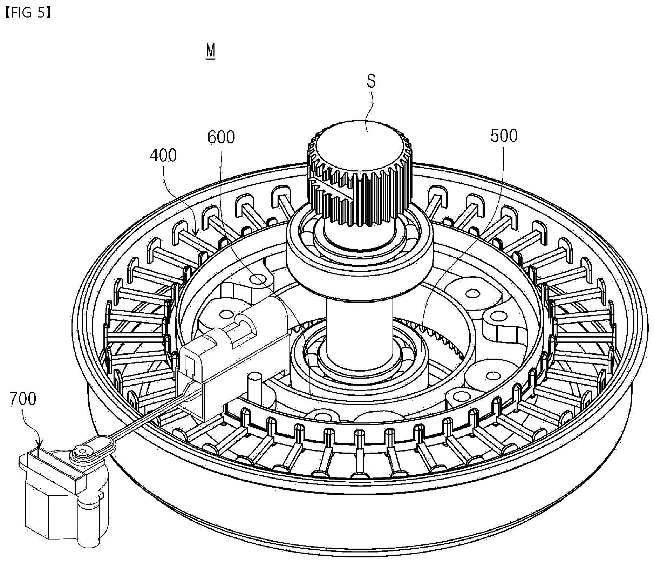

FIG. 5 illustrates an embodiment of a driver of the present disclosure.

The driver M according to the present disclosure may include the rotation shaft S that is coupled to the drum 30 and rotates together with the drum 30, the motor 400 that provides the power for rotating the rotation shaft S, a gear assembly 500 that may change the torque and the rotation speed from the power generated by the motor 400, the clutch 600 that controls the gear assembly 500 to determine the torque and the rotation speed of the motor 400, and an actuation assembly 700 that controls the clutch 600.

The motor 400 generates a rotational force or the power capable of actually rotating the rotation shaft S by receiving electric power.

The gear assembly 500 may include a plurality of gears rotatable by the power or the rotational force generated by the motor 400. The gears may maintain or reduce the rotation speed of the rotational force generated by the motor 400. For example, the gear assembly 500 may be composed of a plurality of gears, such as a sun gear, a planetary gear, and a ring gear, which rotate while being engaged with each other at different diameters.

The rotation shaft S may not be directly coupled to the motor 400, but may be coupled to the gear assembly 500 to receive the power from the motor 400.

The gear assembly 500 may be disposed between the rotation shaft S and the motor 400 to connect the motor 400 and the rotation shaft S to each other.

The gear assembly 500 may reduce the power generated from the motor 400 and transmit the reduced power to the rotation shaft S or transmit the power to the rotation shaft S as it is.

The clutch 600 may change a rotation scheme of the gear assembly 500. For example, the plurality of gears constituting the gear assembly 500 may be fixed to rotate integrally or as a whole, or the plurality of gears constituting the gear assembly 500 may be induced to rotate individually.

The clutch 600 may change a rotational state of the gear assembly 500 by changing an installation location or a coupled location thereof with respect to the motor 400 and the gear assembly 500.

As a result, the clutch 600 may determine whether the gear assembly 500 transmits the power or the rotational force generated from the motor 400 to the rotation shaft S as it is or lowers the rotation speed, increases the torque, and transmits them to the rotation shaft S.

As a result, the gear assembly 500 may be viewed as serving as a reducer, and the clutch 600 may be viewed as serving to adjust the gear assembly 500 to selectively serve as the reducer.

The actuation assembly 700 may determine whether the gear assembly 500 transmits the output of the motor 400 in the reduced manner or as it is by changing the installation and coupled locations of the clutch 600.

The actuation assembly 700 may be controlled by the control panel, the controller, or the like to change the installation or coupled location of the clutch 600.

The actuation assembly 700 may be physically connected to the clutch 600 to vary the location of the clutch 600. Accordingly, accuracy and reliability may be ensured in controlling the clutch 600.

The motor 400 may be provided in an outer rotor type, and the rotation shaft S and the gear assembly 500 may be at least partially accommodated in the motor 400.

In addition, the clutch 600 may also be at least partially accommodated in the motor 400.

As a result, even when the driver M of the laundry treating apparatus of the present disclosure includes the gear assembly 500 and the clutch 600, a volume thereof may be prevented from being increased.

The actuation assembly 700 may be disposed outward of the motor 400 to ensure a condition in which the location of the clutch 600 is changed as much as possible.

In one example, the actuation assembly 700 may be accommodated and disposed inside the motor 400 as long as it is able to change the location of the clutch 600.

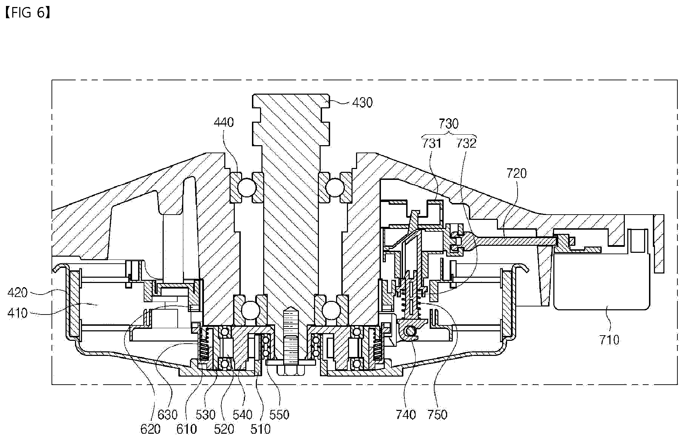

FIG. 6 illustrates an embodiment of an internal structure of the driver M of the present disclosure.

The motor 400 may include a stator 410 coupled to and fixed to the tub 20, and a rotor 420 rotated by the stator 410.

The stator 410 may generate a rotating magnetic field, and the rotor 420 may be equipped as an outer rotor 420 that rotates along an outer circumferential surface of the stator 410 by the rotating magnetic field.

The rotor 420 may generate the power capable of rotating the rotation shaft S while being rotated by the stator 410.

The stator 410 and the rotor 420 may have the same structure as a general outer rotor-type motor.

A center of the rotor 420 may be disposed on the same line as the rotation shaft S. However, the rotation shaft S may be disposed separately from the rotor 420.

The gear assembly 500 may include a sun gear 510 that is coupled to the center or a center of rotation of the rotor 420 and rotates together with the rotor 420, and a planetary gear 520 that rotates by being engaged with an outer circumferential surface of the sun gear 510 and revolves around the sun gear 510.

The sun gear 510 may be formed in a cylindrical or disk shape having gear teeth on the outer circumferential surface thereof, and the planetary gear 520 may be formed in a cylindrical or disk shape having gear teeth engaged with the sun gear 510 on an outer circumferential surface thereof.

A diameter of the sun gear 510 may correspond to a diameter of the rotation shaft S. For example, the diameter of the sun gear 510 may be smaller than the greatest diameter of the rotation shaft S. Accordingly, a moment of rotational inertia of the sun gear 510 may be reduced.

The sun gear 510 may be coupled to the center of the rotor 420. The sun gear 510 may be fixed to the rotor 420 and may rotate integrally with the rotor 420. As a result, the sun gear 510 may rotate at the same RPM as the rotor 420, and the power generated from the rotor 420 may be transmitted to the sun gear 510 as it is.

The planetary gear 520 may include two or more planetary gears and may rotate by being engaged with the outer circumferential surface of the sun gear 510. Because the planetary gear 520 rotates by being engaged with the sun gear 510, the planetary gear 520 may rotate in a direction opposite to a rotation direction of the sun gear 510.

The gear assembly 500 may further include a carrier 540 having rotation shafts of the plurality of planetary gears 520.

The carrier 540 may form the rotation shafts of the plurality of planetary gears 520, and at the same time, may be coupled with a distal end of the rotation shaft S in an area facing or overlapping the sun gear 510 in an axial direction.

The rotation shaft S may be coupled to a center of the carrier 540. The center of the carrier 540 may be coupled to a fastening member to which the rotation shaft S is coupled.

The rotation shaft S may be more firmly coupled to the carrier 540 via the fastening member. The rotation shaft S may be disposed to be spaced apart from the sun gear 510 and the rotor 420.

When the sun gear 510 rotates, the planetary gear 520 may rotate in the opposite direction to the sun gear 510 and rotate around the sun gear 510 by a reaction force. As a result, the carrier 540 may also rotate together by the rotation of the planetary gear 510. The carrier 540 and the rotation shaft S may rotate in the same direction as the sun gear 510.

In one example, the gear assembly 500 may further include a ring gear 530 that is disposed to be engaged with outer circumferential surfaces of the plurality of planetary gears 520 and accommodates all of the planetary gears 520.

The ring gear 530 may be formed in a ring shape. An inner circumferential surface of the ring gear 530 may be spaced apart from the outer circumferential surface of the sun gear 510 by a diameter of the planetary gear 520.

Gear teeth may be disposed on the inner circumferential surface of the ring gear 530. The gear teeth on the inner circumferential surface of the ring gear 530 may rotate by being engaged with the gear teeth of the outer circumferential surface of each planetary gear 520.

The planetary gear 520 and the sun gear 510 may be disposed inside the ring gear 530.

When the ring gear 530 is fixed, while the sun gear 510 rotates, the planetary gear 520 may rotate the carrier 540 while revolving around the sun gear 510 by being engaged with the inner circumferential surface of the ring gear 530. As a result, the rotation shaft S may rotate by being decelerated by a gear ratio of the planetary gear 520, the carrier 540, and the sun gear 510. However, because power or rotational energy of the sun gear 510 is maintained as it is, the rotation shaft S may rotate with a greater torque.

However, when the ring gear 530 is not fixed and is rotatable, the planetary gear 520 and the ring gear 530 may rotate integrally with each other. That is, the sun gear 510, the planetary gear 520, and the ring gear 530 may all rotate at the same RPM as the sun gear 510. As a result, the rotation shaft S may rotate at the same RPM as the sun gear 510 and the rotor 420 without being decelerated.

The clutch 600 may selectively fix the ring gear 530. The clutch 600 may fix the ring gear 530 so as not to rotate, or may release the fixing such that the ring gear 530 may freely rotate.

The clutch 600 may include a coupler 610 that is coupled to an outer circumferential surface of the ring gear 530 and rotates together with the ring gear 530, a stopper 620 that fixes the coupler 610 so as not to rotate, and an elastic portion 630 that pushes the coupler 610 from the stopper 620.

The coupler 610 may be formed in a ring shape coupled to the outer circumferential surface of the ring gear 530. The coupler 610 may include gear teeth engaged with the ring gear 530 on an inner circumferential surface thereof, and the ring gear 530 may include gear teeth engaged with the coupler 610 on the outer circumferential surface thereof.

The coupler 610 may be coupled to the ring gear 530 to be movable in a vertical direction along an axial direction of the ring gear 530.

The stopper 620 may fix the coupler 610 such that the coupler 610 does not rotate when it comes into contact with the coupler 610.

For example, the stopper 620 may be coupled and fixed to the stator 410. Accordingly, the stopper 620 may prevent the movement or the rotation of the coupler 610 even when being in contact with the coupler 610, and may provide a force for stopping the coupler 610.

The stopper 620 may be disposed upward of the coupler 610.

When the coupler 610 is spaced apart from the stopper 620, the coupler 610 may allow the rotation of the ring gear 530. In this case, because the coupler 610, the ring gear 530, and the rotation shaft S rotate at the same RPM as the rotor 420, there is no possibility that the coupler 610 may be damaged by the rotor 420.

Accordingly, the coupler 610 may come into contact with the rotor 420 when spaced apart from the stopper 620.

In one example, the elastic portion 630 may be formed as a spring disposed between the stopper 620 and the coupler 610.

The elastic portion 630 may provide a force for separating the coupler 610 from the stopper 620 to induce the ring gear 530 to freely rotate. As a result, as long as an external force of pressing the elastic portion 630 is not generated, the ring gear 530 may be freely rotated, so that the rotation shaft S may rotate at the same RPM as the rotor 420.

The elastic portion 630 may push the coupler 610 from the stopper 620 until the coupler 610 comes into contact with the rotor 420.

The driver M of the present disclosure may further include the actuation assembly 700 that determines a location of the coupler 610.

The actuation assembly 700 may provide a force for raising and lowering the coupler 610.

The actuation assembly 700 may apply a force greater than an elastic force of the elastic unit 630 to the coupler 610. As a result, the actuation assembly 700 may bring the coupler 610 into close contact with the stopper 620 regardless of the elastic portion 630.

The actuation assembly 700 may apply a force to reciprocate the coupler 610 in the axial direction at the outer circumferential surface of the ring gear 530.

However, because the elastic force by the elastic portion 630 may be used, the actuation assembly 700 may provide only a force for moving the coupler 610 from the ring gear 530 to the stopper 620. That is, the actuation assembly 700 may omit a means for providing a force for moving the coupler 610 to the rotor 420. As a result, structures of the actuation assembly 700 and the coupler 610 may be simplified.

The actuation assembly 700 may include the actuator 710 that generates power to move the coupler 610, a connector 720 that generates a displacement difference in a straight line when the actuator 710 is operated, a conversion member 730 that converts the displacement difference of the connector 720 into a displacement in which the coupler 610 ascends and descends, and a lever 740 that is coupled to the conversion member 730 and moves the coupler 610 to the stopper 620.

The lever 740 may be coupled to the coupler 610 or may support a portion of the coupler 610.

The lever 740 may transmit a force for pushing the coupler 610 to the stopper 620, or may move away from the coupler 610 and induce the coupler 610 to move to the rotor 420. As a result, the lever 740 may reciprocate the coupler 610.

The actuator 710 may be disposed outside the stator 410 and the rotor 420 to sufficiently generate the displacement in which the coupler 610 reciprocates.

The actuator 710 may be coupled and fixed to the bearing housing 24.

In one example, the motor 400 may include a plurality of bearings 440 that rotatably support the rotation shaft S. The bearings 440 may be embedded in through-holes extending through the bearing housing 24, and may be spaced apart from each other along a longitudinal direction of the rotation shaft S and support the rotation shaft S so as not to be twisted.

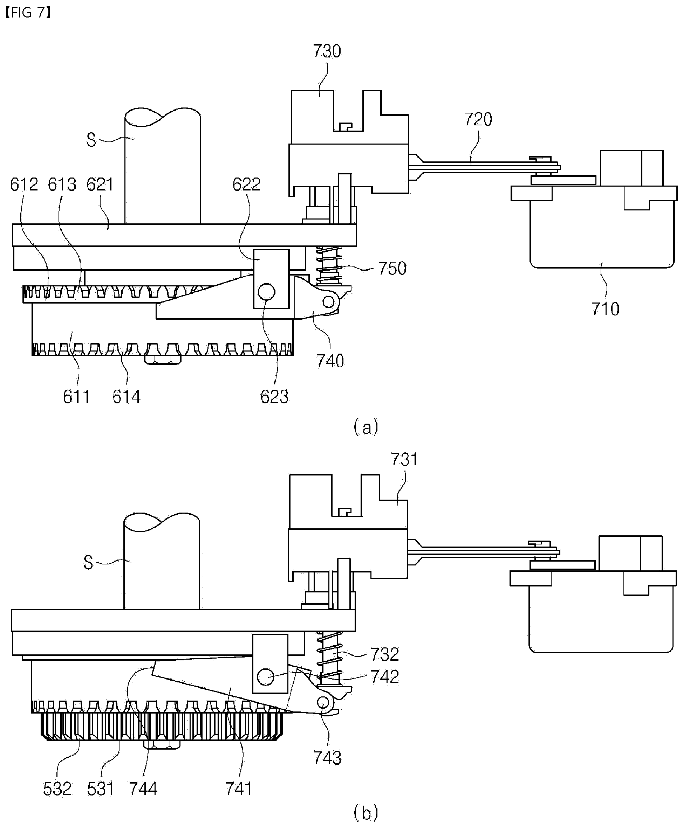

FIG. 7 illustrates an operating principle of a clutch of the present disclosure.

(a) in FIG. 7 illustrates that the clutch is disposed in a normal mode in which the rotation shaft S rotates at the RPM of the rotor 420, and (b) in FIG. 7 illustrates that the clutch is disposed in a deceleration mode in which the rotation shaft S rotates at a speed lower than the RPM of the rotor 420.

Referring to (a) in FIG. 7, the coupler 610 may include a coupler body 611 that accommodates the outer circumferential surface of the ring gear 530, and a supporting member 612 that protrudes from an outer circumferential surface of the coupler body 611 and is able to be supported by the lever 740.

The coupler body 611 may include one surface facing the drum 30 and the other surface facing the rotor, and may include a cylindrical exposed surface between the one surface and the other surface.

The supporting member 612 may protrude in a ring shape from the exposed surface of the coupler body 611, and may be disposed in a state in which, even when the coupler body 611 rotates, the other surface thereof facing the rotor is always supported by or facing the lever 740.

The supporting member 612 may be disposed closer to the one surface than to the other surface of the coupler body 611, and one surface of the coupler body 611 and the one surface of the supporting member 612 may be disposed in parallel with each other.

The coupler 610 may reciprocate the ring body 530 in the axial direction. To this end, the gear teeth may be formed on the outer circumferential surface of the ring body 530 in the axial direction, and the gear teeth that may be engaged with the gear teeth of the ring body 530 may be formed on an inner circumferential surface of the coupler body 611.

The stopper 620 may be disposed to be spaced apart in a direction closer to the drum 30 than the ring body 530, and may be disposed such that one surface facing the rotor faces the coupler 610.

The coupler body 611 may reciprocate between the stopper 620 and the rotor 420.

When the coupler body 611 is fixed to the stopper 620, the coupler body 611 may be blocked from rotating and may fix the ring body 530. The coupler 610 may further include fixing teeth 613 disposed on one surface of the coupler body 611 or the supporting member 612 so as to be fixed to the stopper 620 when in contact with the stopper 620.

The fixing teeth 613 may be formed along a circumference of the one surface of the coupler body 611 and the supporting member 612, and may be in contact with the stopper 620 and generate a strong fixing force to the coupler 610.

The stopper 620 may include gear teeth that may be engaged with the fixing teeth 613 on one surface facing the coupler 610.

The coupler body 611 may further include, on the other surface thereof, rotary teeth 614 that may be fixed to the rotor 420 when it comes into contact with the rotor 420.

The rotor 420 may include gear teeth that may be engaged with the rotary teeth 614 on an inner surface thereof facing the coupler body 611.

The elastic portion 630 may be disposed between the stopper 620 and the supporting member 612 and provide a pushing force when being compressed.

The coupler 610 may be fixed to the stopper 620 as the elastic portion 630 is pressed while the supporting member 612 is pressed to the drum 30 by the actuation assembly 700.

In addition, when the force by which the actuation assembly 700 pushes the supporting member 612 is removed or when the actuation assembly 700 pulls the supporting member 612 to the rotor 420, the elastic portion 630 may expand to push the coupler 610. As a result, the coupler 610 may be spaced apart from the stopper 620 and the rotation thereof may be allowed.

The actuation assembly 700 may include the actuator 710 that generates a rotational motion with a predetermined radius.

The actuator 710 may be formed as a general motor that rotates a shaft with a predetermined radius.

The connector 720 may be formed in a rod shape in which one end is connected to the shaft rotating in the actuator 710 and the other end extends toward the rotation shaft S.

The conversion member 730 may accommodate the other end of the coupler 720 therein and guide the other end of the connector 720 to reciprocate. When one end of the connector 720 is rotated by the actuator 710, the other end of the coupler 720 may be guided by the conversion member 730 to linearly reciprocate.

The actuator 710 may be disposed outside the rotor 420. The conversion member 730 may be disposed between the actuator 710 and the rotation shaft S, and may be disposed closer to the drum 30 than the stopper 620. Accordingly, the connector 720 and the conversion member 730 may be disposed outside the motor 400 to prevent interference with the motor 400.

**The conversion member 730 may include a guide 731 that is coupled to a distal end of the connector 720 and reciprocates in a diameter direction of the rotation shaft s, and a grip portion 732 having one end coupled to or in contact with the guide 731 to reciprocate in the axial direction of the rotation shaft s. A distal end of the grip portion 732 may be coupled to the lever 740.**

As a result, the conversion member 730 may convert a linear motion of the guide 731 in the radial direction into a linear motion of the grip portion 732 in the axial direction.

The lever 740 may include a lever body 741 disposed between an outer portion of the coupler body 611 and the stator 410, a pressable portion 744 disposed at one end of the lever body 741 so to be in contact with the other surface of the supporting member 612, a fixing portion 743 disposed at the other end of the lever body 742 and coupled to the grip portion 743, and a rotatable portion 742 disposed between the pressable portion and the fixing portion to fix the lever body 741.

The rotatable portion 742 may be coupled to the stopper 620 to fix the lever 740.

**The stopper 620 may include a fixing rib 622 extending from an outer circumferential surface thereof toward the exposed surface of the coupler body 611.** The fixing rib 622 may extend from an outer surface of the stopper 620 in the axial direction.

The rotatable portion 742 may be rotatably coupled to the fixing rib 621. Accordingly, the lever 740 may rotate in the axial direction about the rotatable portion 742.

Referring to (b) in FIG. 7, when the distal end of the grip portion 742 moves toward the rotor, the pressable portion 744 may push the supporting member 612 toward the stopper 620. The coupler body 611 may move toward the drum 30 from the outer circumferential surface of the ring body 530 and may be fixed to the stopper 620. In this process, the fixing teeth 613 may be engaged with the gear teeth disposed on one surface of the stopper 620, and the elastic portion 630 may be pressed.

As a result, the coupler 610 may be fixed to the stopper 620 and restrain the ring body 530. In this state, when the rotor 420 rotates, the rotation shaft S rotates at a speed lower than that of the rotor 420 based on a gear ratio of the gear assembly 500.

When the actuator 710 operates and the grip portion 732 moves toward the drum 30, the pressable portion 744 may be spaced apart from the supporting member 612. The elastic portion 630 may push the coupler 610 from the stopper 620 to separate the coupler body 611 from the stopper 620. As a result, the clutch 600 may return to the state in (a) in FIG. 7.

The coupler 610 may be in contact with the rotor 420, but a state thereof may be switched to a state in which the coupler 610 is able to freely rotate together with the ring body 530 as soon as the coupler 610 is spaced apart from the stopper 620. In this state, when the rotor 420 rotates, the gear assembly 500 rotates integrally with the rotor 420, so that the rotation shaft s may rotate at the same speed as the rotation speed of the rotor 420.

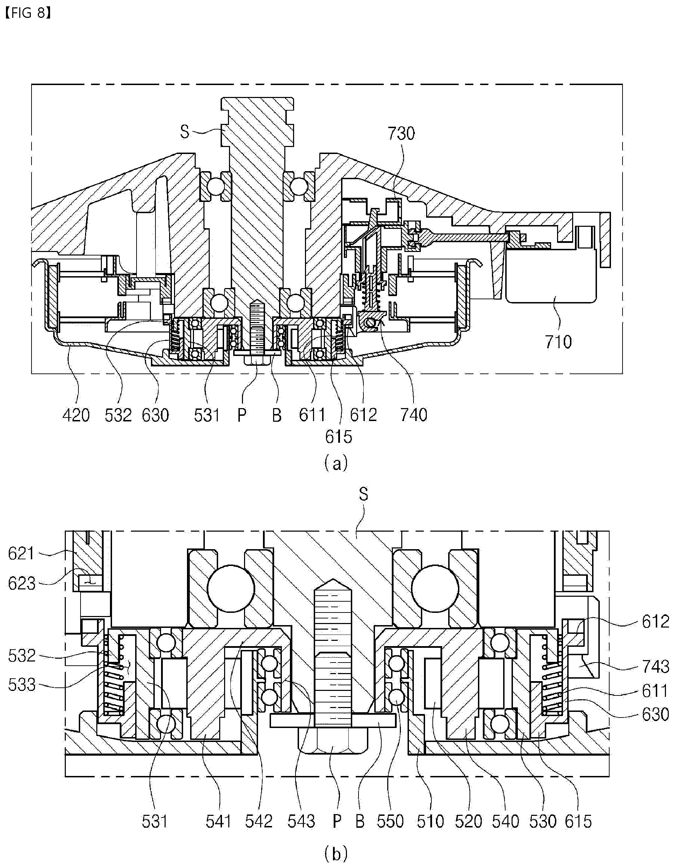

FIG. 8 illustrates a detailed structural embodiment of a driver of a laundry treating apparatus of the present disclosure.

(a) in FIG. 8 illustrates a structure of the entire driver M, and (b) in FIG. 8 illustrates a structure of the gear assembly 500.

A portion of the outer circumferential surface of the sun gear 510 may be coupled and fixed to a central hole of the rotor 420.

The remaining portion of the outer circumferential surface of the sun gear 510 other than the portion coupled to the rotor 420 may be engaged with the outer circumferential surface of the planetary gear 520.

The gear teeth may be omitted at a portion of the sun gear 510 coupled to the rotor 420.

The sun gear 510 may be formed in a cylindrical shape and define a hollow 512 therein.

The carrier 540 may include a planetary shaft 541 that forms a rotation shaft of the planetary gear 520, a connecting surface 542 that connects all distal ends of the planetary shafts 541 to each other and faces the bearing housing, and a portion-to-be-inserted 543 that is inserted into the hollow of the sun gear at the connecting surface 542.

The sun gear 510 may be disposed between the planetary shaft 541 and the portion-to-be-inserted 543. Accordingly, an installation space of the sun gear 510 and the carrier 540 may be minimized.

The portion-to-be-inserted 543 may be formed in a ring or pipe shape, and may be disposed to be spaced apart from the inner circumferential surface of the sun gear 510.

The rotation shaft S may be coupled and fixed to at least one of the connecting surface 542 and the portion-to-be-inserted 543.

For example, the distal end of the rotation shaft S may have a diameter smaller than that of a central portion, so that the distal end of the rotation shaft S may be inserted into the portion-to-be-inserted 543, and an area of the rotation shaft S, which is not inserted into the portion-to-be-inserted 543, may have a stepped portion to be supported by the connecting surface 542.

The portion-to-be-inserted 543 may have gear teeth or a screw thread on an inner circumferential surface thereof, and the rotation shaft S may have a corresponding screw thread engaged with the portion-to-be-inserted 543 at the distal end thereof.

In addition, the distal end of the rotation shaft S may be coupled to the fastening member, and when the fastening member is inserted into and fastened to the distal end of the rotation shaft S, a bushing facing the portion-to-be-inserted 543 may be pressed to the portion-to-be-inserted 543. As a result, a coupling force between the rotation shaft S and the carrier 540 may be enhanced

A rotation bearing 550 that blocks the rotational force of the sun gear 510 from being transmitted to the portion-to-be-inserted 543 may be disposed between an outer circumferential surface of the portion-to-be-inserted 543 and the inner circumferential surface of the sun gear 510.

The rotation bearing 550 may be inserted into the hollow 512 of the sun gear 510, and the portion-to-be-inserted 543 may be inserted into the rotation bearing 550.

The rotation bearing 550 may serve to prevent the rotational force of the sun gear 510 from being transmitted to the carrier 540 even when the sun gear 510 rotates.

The connecting surface 542 of the carrier 540 may be in contact with a bearing fixed to the bearing housing 24 of the tub.

The ring gear 530 may include the ring body 531 having the inner circumferential surface engaged with the outer circumferential surface of the planetary gear 540, and an accommodating rib 532 extending outward from one surface of the ring body 531 facing the drum 30 to define an accommodation space 533 capable of accommodating one surface of the coupler body 611.

The accommodating rib 532 may have a C-shaped cross-section and may extend from the outer circumferential surface of the ring body 531 such that an opening defines an opening toward the rotor.

The elastic portion 630 may be inserted into the accommodation space 533 and push the coupler body 611 downward. In this case, the ring body 531 may serve as a limiting portion that limits a movement width of the coupler body 611.

The ring body 531 may include gear teeth that is engaged with the coupler body 611 on the outer circumferential surface thereof.

The clutch 600 may include the coupler body 611 disposed on the outer circumferential surface of the ring body 611, and reciprocation gear teeth 615 disposed on the inner circumferential surface of the coupler body 611 and in contact with the outer circumferential surface of the ring body 611.

The coupler body 611 may have a thickness greater than that of the reciprocation gear teeth 615.

The coupler body 611 may have a groove in which one surface facing the drum is opened, and at least a portion of the elastic portion 630 may be accommodated in the corresponding groove.

One end of the elastic portion 630 may be supported by the accommodation space 533, and the other end thereof may be supported by the groove of the coupler body 611.

The supporting member 612 may protrude from the outer circumferential surface of the coupler body 611. The supporting member 612 may extend from the coupler body 611 toward the tub 20 to be closer to the tub 20 than the reciprocation gear teeth 615. The fixing teeth 613 may be formed on one surface of the supporting member 612.

The stopper 620 may include a stopper body 621 fixed to the stator and a fixing rib 622 extending from the stopper body 621, and may include fixing gear teeth 623 that is engaged with the fixing teeth 613 at a lower portion of the stopper body 621. The fixed gear teeth 623 may define a space into which a portion of the supporting member 612 may be inserted.

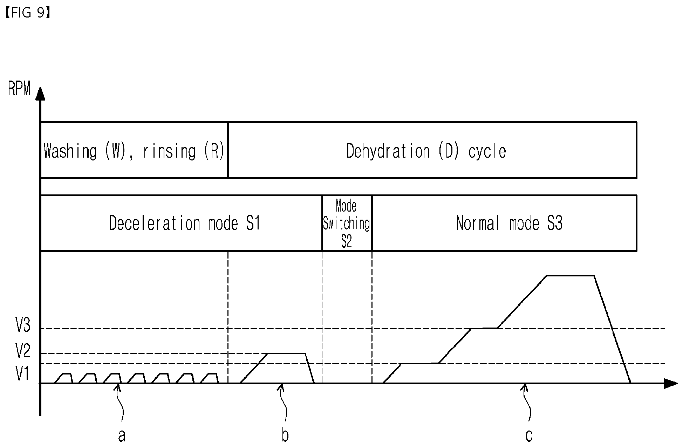

FIG. 9 illustrates a control method of a laundry treating apparatus of the present disclosure.

When receiving a command to execute the washing course via the control panel, the laundry treating apparatus of the present disclosure may execute a washing cycle W, a rinsing cycle R, and a dehydration cycle D.

The washing cycle W is a cycle of removing the foreign substances from the laundry while rotating the drum 30 with the detergent after water is supplied to the tub 20.

The rinsing cycle R is a cycle in which, after all water in the tub 20 is drained after the washing cycle W is completed, only water is supplied to the tub 20 again to rotate the drum 30 and the separated foreign substances and the detergent are removed.

The dehydration cycle D is a cycle of discharging moisture contained in the laundry via a centrifugal force by rotating the drum 30 in a state in which all water is drained from the tub 20 when the rinsing cycle R is terminated and there is no need to discharge the foreign substances and the detergent anymore.

Because the washing cycle and the rinsing cycle are in a state in which water is accommodated in the tub 20, a load of the driver M is great to rotate the drum 30. In addition, because the foreign substances or the detergent is effectively separated only when a sufficient physical force is transmitted to the laundry accommodated in the drum 30, there is a need to frequently change the rotation direction of the drum 30 or repeatedly rotate and stop the drum 30.

The clutch 600 of the laundry treating apparatus of the present disclosure may determine a deceleration mode S1 of being disposed at the location to block the rotation of the ring gear 530 and rotating the rotation shaft S at the speed lower than that of the rotor 420, and a normal mode S3 of being disposed at the location to allow the rotation of the ring gear 530 and rotating the rotation shaft S at the same speed as the rotor 420.

In the deceleration mode S1, the coupler 610 may move toward the stopper 620 and be in a state of being fixed to the stopper 620, and in the normal mode S3, the coupler 610 may move toward the rotor 420 and be in a state of being completely separated from the stopper 620 or in close contact with the rotor 420.

In the deceleration mode S1, the rotational force generated from the motor 400 may be more converted into the torque. That is, instead of rotating the rotation shaft S more slowly by the rotational force generated from the motor 400, the rotation shaft S may rotate the drum 30 with a stronger torque.

The laundry treating apparatus of the present disclosure may control the actuation assembly 700 to set the clutch 600 to be in the deceleration mode S1 in the washing cycle and the rinsing cycle. Accordingly, even in a state in which a large amount of laundry is containing water in the drum 30 or in a state in which the drum 30 is submerged in water in the tub 20, the driver M may rotate the drum 30 without difficulty, may easily change the rotation direction of the drum 30, and may repeat the rotation and the stopping of the drum 30.

Accordingly, in the washing cycle and the rinsing cycle, a washing force and a rinsing force may be further strengthened, and even when the laundry such as a blanket or a large amount of laundry is put into the drum 30, the washing force and the rinsing force may be guaranteed.

When water is supplied to the tub 20 as in the washing cycle W and the rinsing cycle R and the tub 20 is not empty, the laundry treating apparatus of the present disclosure may control the drum 30 to rotate at a speed up to a first speed lower than the resonance speed V3.

When the clutch 600 is set to be in the deceleration mode S1, because the rotation shaft S is rotated at the speed lower than the rotation speed of the rotor 420, the rotation shaft S may not be able to rotate at a speed higher than the resonance speed V3.

Accordingly, in the washing cycle and the rinsing cycle, the laundry treating apparatus of the present disclosure may be fundamentally blocked from excessively generating the vibration.

In the laundry treating apparatus of the present disclosure, in the washing cycle W and the rinsing cycle R, the drum may repeat a process of being accelerated up to the first speed, being maintained for a predetermined time, and being stopped, or the drum may repeat a process of being stopped, changing the rotation direction and being accelerated up to the first speed, being maintained for a predetermined time, and being stopped.

In one example, when the washing cycle W and the rinsing cycle R are terminated, the laundry treating apparatus of the present disclosure may drain water accommodated in the tub 20.

The laundry treating apparatus of the present disclosure may execute the dehydration cycle D when all of water in the tub 20 is drained and the tub 20 is empty.

Alternatively, when the water level sensor 25 senses that the water level of the tub 20 has reached a water level not in contact with the drum 30 after water is supplied to the tub 20, the laundry treating apparatus of the present disclosure may execute the dehydration cycle R.

The dehydration cycle R aims to discharge moisture contained in the laundry to the tub 20 by applying a centrifugal force to the laundry. To this end, it may be considered that the drum 30 is directly accelerated to a speed equal to or higher than the resonance speed V3.

However, the laundry treating apparatus of the present disclosure may execute a simplified dehydration cycle d in which the drum 30 is first accelerated to a vicinity of the resonance speed V3 and stopped before the drum 30 is immediately accelerated to a maximum speed at which the driver M may rotate the drum 30 the fastest, and a main dehydration cycle c in which the drum 30 is rotated at a speed equal to or higher than a second speed V2 at which the centrifugal force may be generated in the laundry beyond the resonance speed V3 after the simplified dehydration cycle is completed.

That is, the laundry treating apparatus of the present disclosure may execute the dehydration cycle as the simplified dehydration cycle d and the main dehydration cycle c.

The laundry treating apparatus of the present disclosure may primarily dehydrate water contained in the laundry via the simplified dehydration cycle d to reduce a weight of the laundry, and in this process, may check whether unbalance or excessive vibration occurs inside the tub 20.

When the unbalance occurs or the vibration with the magnitude exceeding the allowable value occurs in the tub 20 in the simplified dehydration cycle d, the laundry treating apparatus of the present disclosure may not execute the main dehydration cycle c and repeat the simplified dehydration cycle d.

In one example, when the unbalance occurs or the vibration with the magnitude exceeding the allowable value occurs in the tub 20 even in the process of executing the main dehydration cycle c, the laundry treating apparatus of the present disclosure may stop the main dehydration cycle c and reduce the vibration by decelerating the drum to the second speed v2 lower than the maximum speed, or may stop the main dehydration cycle c and execute the simplified dehydration cycle d again.

In one example, the laundry treating apparatus of the present disclosure may check whether the excessive vibration occurs inside the tub 20 while first accelerating the drum to the first speed v1 and maintaining the rotation speed for a predetermined time when executing the main dehydration cycle c.

In the process of rotating at the first speed V1, when only vibration with a magnitude equal to or lower than the allowable value occurs in the tub 20, the laundry treating apparatus of the present disclosure may check whether the excessive vibration occurs in the tub 20 while controlling the driver M to immediately accelerate the drum to the second speed v2, which is the speed equal to or higher than the resonance speed v3, and maintaining the rotation speed for a predetermined time.

In the process of rotating at the second speed V2, when only the vibration with the magnitude equal to or lower than the allowable value occurs in the tub 20, the laundry treating apparatus of the present disclosure may not only check whether the excessive vibration occurs in the tub 20, but also remove moisture contained in the laundry in earnest while controlling the driver M to immediately accelerate the drum to the maximum speed higher than the second speed V2 and maintaining the rotation speed for a predetermined time.

As such, the laundry treating apparatus of the present disclosure may gradually increase the rotation speed of the drum in the main dehydration cycle c.

In one example, because a purpose of the dehydration cycle D is to remove moisture from the laundry by rotating the drum 30 at a speed higher than the first speed, the laundry treating apparatus of the present disclosure may control the clutch 600 to switch a mode thereof to the normal mode S3.

However, the laundry treating apparatus of the present disclosure may set the clutch 600 to be still in the deceleration mode S1 when executing the simplified dehydration cycle d, and switch the mode of the clutch 600 to the normal mode S3 when executing the main dehydration cycle c.

In other words, the laundry treating apparatus of the present disclosure may further maintain the clutch 600 in the deceleration mode S1 even when the washing cycle W and the rinsing cycle R are terminated and the tub 20 is empty.

The laundry treating apparatus of the present disclosure may rotate the drum 30 while the clutch 600 is in the deceleration mode S1, considering that the laundry containing water is relatively heavy after at least one of the washing cycle W and the rinsing cycle R is finished.

Accordingly, the laundry treating apparatus of the present disclosure may accelerate the drum 30 without difficulty in the state in which the drum 30 accommodating the laundry containing water is stopped, and may also prevent the motor 400 from being overloaded.

The laundry treating apparatus of the present disclosure may increase the output of the motor 400 even in the deceleration mode S1, thereby rotating the rotation shaft S and the drum 30 by accelerating them to the resonance speed V3. Accordingly, in the simplified dehydration cycle d, the laundry treating apparatus of the present disclosure may rotate the rotation shaft S and the drum 30 at a rotation speed higher than the first speed V1. Even in this case, the rotation speed may be limited to a speed lower than the resonance speed V3.

The laundry treating apparatus of the present disclosure may rotate the drum 30 longer in the simplified dehydration cycle d than in the washing cycle W and the rinsing cycle R. As a result, moisture of the laundry may be sufficiently dehydrated. In the simplified dehydration cycle d, when the drum is accelerated once, the rotation speed of the drum may be maintained for 10 seconds or more. In addition, the main dehydration step c may be executed much longer than the simplified dehydration step d. Therefore, the drum 30 may be considered to repeat the rotation and the stopping more frequently when water is accommodated in the tub 20 than when the tub 20 is empty.

That is, when the clutch 600 is set to be in the deceleration mode S1, the laundry treating apparatus of the present disclosure may rotate the drum 30 at a higher speed, may rotate the drum 30 longer, and may rotate the drum 30 more frequently when the tub 20 is empty than when the water level in the tub 20 is sensed.

When the drum 30 rotates at the speed higher than the first speed V1 and stops while the clutch 600 is in the deceleration mode S1, the motor 400 may stop operating. In this process, the clutch 600 may undergo a mode switching S2 process of switching from the deceleration mode S1 to the normal mode S3. That is, the laundry treating apparatus of the present disclosure may control the actuation assembly 700 to separate the coupler 610 from the stopper 620, thereby allowing the ring gear 530 to freely rotate.

When the mode of the clutch 600 is switched to the normal mode S3, the laundry treating apparatus of the present disclosure may operate the motor 400 to accelerate the rotation shaft S to the maximum speed to execute the main dehydration cycle c.

In the normal mode S3, the torque generated from the rotation shaft S is small, but is able to guarantee the rotation speed of the rotation shaft S. Accordingly, the laundry treating apparatus of the present disclosure may dehydrate the laundry, which has been lightened in the normal mode S3, without a possibility of occurrence of the unbalance.

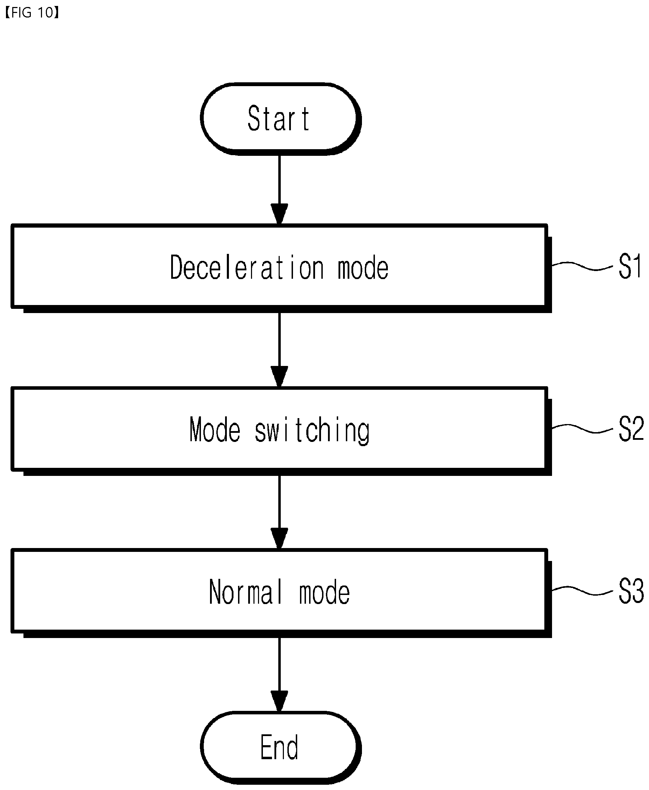

FIG. 10 illustrates a clutch control method of a laundry treating apparatus of the present disclosure.

To execute the above-described washing course, the laundry treating apparatus of the present disclosure may execute the deceleration mode S1 of fixing, with the clutch 600, the ring gear 530 so as not to move.

The deceleration mode S1 may correspond to operating the actuation assembly 700 to press the coupler 610 to the stopper 620 with the lever 740 and maintaining the pressed state with the lever 740 such that the coupler 610 is not separated from the stopper 620.

The deceleration mode S1 may be executed when the laundry treating apparatus is turned on, or may be executed before water is supplied to the tub 20 or when water is supplied to the tub 20.

Alternatively, the deceleration mode S1 may be executed after the drum 30 is rotated to sense the laundry amount and then the drum 30 is stopped.

When the power supply to the actuation assembly 700 is cut off after the previous washing course is terminated, the force of operating the lever 740 is also removed, so that the elastic portion 630 may push the coupler 610. In addition, because the washing course is finished in the dehydration cycle D and the dehydration cycle D is ended in the normal mode S3, when the laundry treating apparatus is turned on again, the clutch 600 may be set to be in the normal mode S3.

Accordingly, the laundry treating apparatus of the present disclosure may fix the ring gear 530 to the clutch 600 by setting the deceleration mode S1 before executing the washing cycle W or the rinsing cycle R.

In another aspect, in the laundry treating apparatus of the present disclosure, when the drum 30 needs to be rotated while water is accommodated in the tub 20, the deceleration mode S1 may be necessarily set before the drum 30 is rotated.

When the washing cycle W and the rinsing cycle R are completed, the deceleration mode S1 may be maintained until the simplified dehydration step b during the dehydration cycle D. When the simplified dehydration step b is terminated, the laundry treating apparatus of the present disclosure may execute the switching mode S2 in which the clutch 600 releases the fixing of the ring gear 530.

The switching mode S2 may correspond to a step of cutting off the power of the actuator 710 or operating the actuator 710 to separate the lever 740 from the coupler 610. The switching mode S2 may be executed in a state in which the operation of the motor 400 is stopped and the rotation of the rotation shaft S is stopped.

This may correspond to setting the mode to switch to the normal mode after the drum 30 rotates in the deceleration mode in the state in which the tub 20 is empty.

In the switching mode S2, when the coupler 610 is spaced apart from the stopper 620, the normal mode S3 of maintaining a state of fixing the coupler 610 to the rotor 420 or separating the coupler 610 from the stopper 620 may be set.

Accordingly, the ring gear 530 may freely rotate, and when the sun gear 510 rotates, it may rotate integrally with the carrier 540. Accordingly, the rotation shaft S may rotate at the same speed as the rotor 420, and when the rotor 420 is accelerated and rotates at the maximum speed, the rotation shaft S may also be accelerated and rotate at the maximum speed.

The switching mode S2 and the normal mode S3 may be executed during the dehydration cycle D, and may be executed in the state in which the tub is empty. In addition, the switching mode S2 and the normal mode S3 may be executed after the simplified dehydration step d.

In addition, the deceleration mode S1 may be executed in the washing cycle and the rinsing cycle, and may be maintained until the simplified dehydration step d during the dehydration cycle D.

Such a control method may be visibly implemented as follows.

It may be considered that the mode of the clutch 600 is switched to the normal mode S3 when the drum stops after the rotation in the state in which the tub 20 is empty and the clutch 600 is set to be in the deceleration mode S1.

It may be considered that the mode of the clutch 600 is switched to the normal mode s3 after the drum rotates for a predetermined time or a predetermined number of times in the deceleration mode S1.

Because the main dehydration step c is set to be longer than the simplified dehydration step d, a duration for the clutch 600 to be in the normal mode may be set greater than a duration for the clutch 600 to be in the deceleration mode.

Because the simplified dehydration step d is executed for 10 seconds or more, it may be considered that the clutch 600 maintains the deceleration mode S1 such that the drum rotates for at least 10 seconds.

In addition, because the deceleration mode S1 is always set during the washing cycle W and the rinsing cycle R as well as the simplified dehydration step d, it may be considered that the clutch 600 is blocked from switching the mode thereof to the normal mode S3 before the drain pump operates. That is, when water is accommodated in the tub 20, the clutch 600 may maintain the deceleration mode S1.

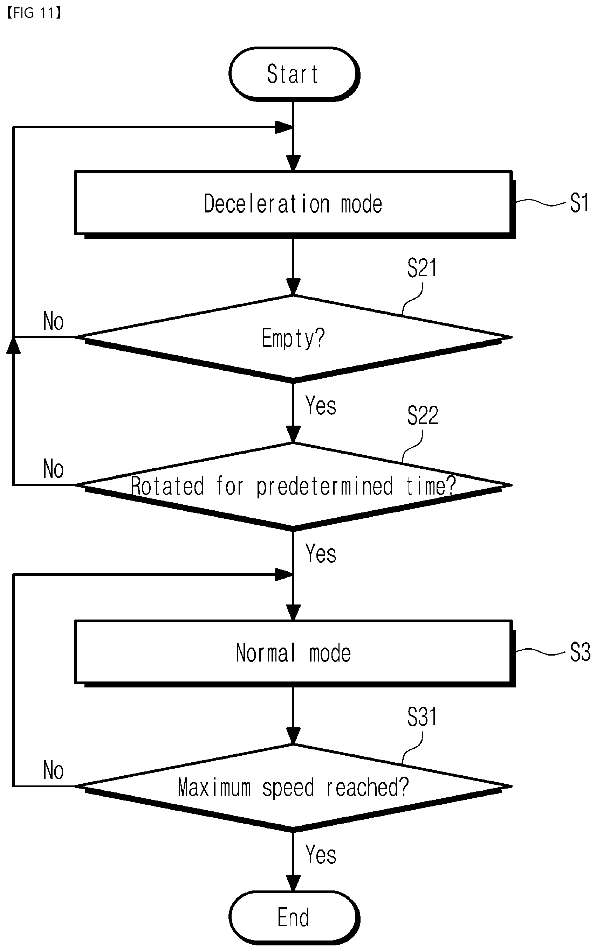

FIG. 11 illustrates a detailed control method embodiment of a laundry treating apparatus of the present disclosure.

When the laundry treating apparatus of the present disclosure is turned on and the washing course is executed, the washing cycle, the rinsing cycle, and the dehydration cycle may be executed.

In this regard, before the washing cycle is executed, the clutch 600 may be set to be in the deceleration mode S1.

When there is a section in which the state in which the water is supplied to the tub 20 and the deceleration mode S1 at least partially overlap each other, a water level sensing step S21 of sensing whether all of water in the tub 20 is drained and a rotation checking step S22 of checking whether the simplified dehydration step d has been passed or whether the drum 30 has been rotated for a predetermined time and stopped in the empty state may be executed.

That is, the switching mode S2 may be considered to include the water level sensing step S21 and the rotation checking step S22.

When water is present in the tub 20 or the rotation of the drum 30 is not finished, the deceleration mode S1 may be maintained.

When the switching mode S2 is completed, the clutch 600 may be maintained in the normal mode S3.

The normal mode S3 may be terminated when the dehydration cycle is completed. That is, when an end step S31 of stopping after the rotation speed of the drum reaches the maximum speed or the main dehydration step c is finished, the normal mode s3 may be ended.

When the normal mode S3 is terminated, the clutch 600 may be maintained in the normal mode S3 until a next washing course is executed. Accordingly, the actuation assembly 700 may be prevented from consuming unnecessary energy.

The present disclosure may be implemented in various modified forms, so that the scope of the rights thereof is not limited to the above-described embodiments. Therefore, when the modified embodiment includes the components of the claims of the present disclosure, it should be regarded as belonging to the scope of the present disclosure.

## Claims

1. A laundry treating apparatus comprising:
a cabinet having an opening defined therein at a front side;
a tub provided to store water and in communication with the opening;
a drum rotatably accommodated in the tub;
a rotation shaft passing through the tub and coupled to a rear surface of the drum;
a motor configured to provide power for rotating the rotation shaft;
a clutch configured to determine a normal mode where the rotation shaft rotates by the power of the motor and a deceleration mode where the rotation shaft decelerates and rotates at a speed lower than a speed in the normal mode; and
a water level sensor configured to sense a water level of the tub,
wherein when the tub is empty, the clutch is set to switch a mode thereof to the normal mode, after the rotation shaft or the drum is rotated while the clutch is set to be in the deceleration mode.

2. The laundry treating apparatus of claim 1, wherein in case that the drum stops after the rotation while the clutch is set to be in the deceleration mode, the clutch is configured to switch the mode thereof to the normal mode.

3. The laundry treating apparatus of claim 2, wherein the clutch is configured to switch the mode to the normal mode, after the drum rotates for a predetermined time or a predetermined number of times in the deceleration mode.

4. The laundry treating apparatus of claim 1, wherein a duration for the clutch to be in the normal mode is set greater than a duration for the clutch to be in the deceleration mode.

5. The laundry treating apparatus of claim 4, wherein the clutch is configured to maintain the deceleration mode such that the drum rotates for at least 10 seconds.

6. The laundry treating apparatus of claim 1, wherein the drum is configured to:
rotate at a speed equal to or lower than a resonance speed in the deceleration mode; and
rotate at a speed equal to or higher than the resonance speed in the normal mode.

7. The laundry treating apparatus of claim 6, wherein the resonance speed is defined as a speed causing vibration with a magnitude equal to or greater than an allowable value within the cabinet when the speed of the drum increases or decreases.

8. The laundry treating apparatus of claim 1, wherein the clutch is configured to maintain the deceleration mode in case that water is accommodated in the tub.

9. The laundry treating apparatus of claim 8, further comprising a drain pump configured to drain water in the tub to the outside of the cabinet,
wherein the clutch is blocked from switching the mode thereof to the normal mode before the drain pump operates.

10. The laundry treating apparatus of claim 8, wherein the drum is configured to rotate more rapidly in case that the tub is empty than in case that water is accommodated in the tub even when the clutch is set to be in the deceleration mode.

11. The laundry treating apparatus of claim 10, wherein the drum is configured to repeat the rotation and stopping more frequently in case that water is accommodated in the tub than in case that the tub is empty.

12. The laundry treating apparatus of claim 1, further comprising a gear assembly coupled to the motor and configured to selectively reduce a rotation speed of the motor,
wherein the clutch is configured to:
allow the gear assembly to rotate at a speed different from the speed of the motor in the deceleration mode; and
allow the gear assembly to rotate integrally with the motor in the normal mode.

13. The laundry treating apparatus of claim 12, wherein the motor includes:
a stator coupled to the tub; and
a rotor rotatable by the stator,
wherein the gear assembly includes:
a solar gear coupled to the rotor;
a plurality of planetary gears disposed to be engaged with an outer circumferential surface of the solar gear;
a ring gear disposed to be engaged with the plurality of planetary gears; and
a carrier rotatable by connecting the plurality of planetary gears to each other, wherein the rotation shaft is coupled to the carrier,
wherein the clutch is configured to:
couple the ring gear to the rotor in the normal mode; and
separate the ring gear from the rotor in the deceleration mode.

14. The laundry treating apparatus of claim 13, wherein the clutch includes:
a coupler coupled to an outer circumferential surface of the ring gear and integrally rotatable with the ring gear;
a stopper coupled to the stator and configured to fix the coupler; and
an elastic portion configured to push the coupler from the stopper to the rotor.

15. The laundry treating apparatus of claim 14, further comprising an actuation assembly configured to move the coupler,
wherein the actuation assembly includes:
an actuator fixed to the tub and configured to generate a rotational motion;
a conversion member configured to convert the rotational motion into a reciprocating motion; and
a lever connected to the conversion member and configured to move the coupler.
